# EUROPÄISCHE PATENTANMELDUNG

(11) **EP 1 867 693 A1**
(43) Veröffentlichungstag der Anmeldung: **19.12.2007**
(21) Anmeldenummer: 06115326.8
(22) Anmeldetag: 12.06.2006
(51) Int. Cl.: C09J 163/00, C08G 59/68, C08G 18/28

(54) **Hybridklebstoff**

(71) Anmelder: Collano AG, 6203 Sempach-Station (CH)
(72) Erfinder: Ferrand, Damien, 68150 Sierentz (FR)
(74) Vertreter: Hepp, Dieter

(57) **Zusammenfassung**

Die Erfindung betrifft einen Hybridklebstoff, umfassend ein Silanharz und ein Epoxidharz, weiter enthaltend (a) mindestens ein nicht-aromatisches, tertiäres Di- oder Polyamin, insbesondere ausgewählt aus der Gruppe bestehend aus aliphatischen Aminen, cycloaliphatischen Aminen, Amido-Aminen, sowie Mischungen davon; und (b) mindestens einen Silankatalysator, welcher keine Amin-Verbindung ist, insbesondere eine Organometall-Verbindung, vorzugsweise ausgewählt aus der Gruppe bestehend aus OrganozinnVerbindungen, Organozirkonat-Verbindungen, Organotitanat-Verbindungen, und Mischungen davon. Der Hybridklebstoff ist für die Applikation an senkrechten Flächen geeignet und von hervorragender Lichtdurchlässigkeit.

## Beschreibung

Die Erfindung betrifft das Gebiet der Hybridklebstoffe, insbesondere Silan/Epoxid-Hybridklebstoffe.

Hybridklebstoffe sind Reaktionsklebstoffe, die durch mindestens zwei chemisch verschiedenartige Reaktionsmechanismen aushärten. Es kommen hierbei zwei verschiedene Polymerharze zum Einsatz, weshalb man auch von Polymerlegierungen spricht. Im Falle eines Silan/Epoxid-Hybridklebstoff wird ein Silan-funktionalisiertes Harz mit einem Epoxidharz, insbesondere 2K-Epoxidharzen kombiniert. Die hochelastischen, flexiblen und zähen Eigenschaften eines Silanklebstoffs können in derartigen Hybridklebstoffen mit den hochfesten, jedoch spröden Eigenschaften eines Epoxidklebstoffs kombiniert werden. Im ausgehärteten Zustand liegen in derartigen Hybridklebstoffen Epoxid-Partikel (harte Domänen) vor, eingebettet in eine Silan-vernetzte Matrix. Zugspannung und Bruchdehnung von Silan/Epoxid-Hybridklebstoffen sind derart, dass sie die diesbezügliche Lücke in der Klebstofftechnik zwischen Silikonen und 2K-PU-Strukturklebstoffen in besonders geeigneter Weise schliessen (vergl. z.B. Damien Ferrand, Willi Schwotzer in Adhesives & Sealants Industry magazine, BNP Media, http://www.adhesivesmag.com, April 2004; und Christian Terfloth, "Automotive Circle International" Conference, 17/18 Oktober 2002, S. 33-42).

Die Eigenschaften der bekannten Silan/Epoxid-Hybridklebstoffe sind jedoch hinsichtlich der Lichtdurchlässigkeit und der Auftragbarkeit an senkrechten Flächen noch nicht optimal. In vielen Fällen, z.B. bei der Anwendung auf Glasflächen, ist eine höchstmögliche Lichtdurchlässigkeit des Klebstoffs ebenso gewünscht wie ein für senkrechte Applikationen geeignetes Fliessverhalten.

Das Produkt Collano A8 6400 weist zwar die gewünschte, transparente Eigenschaft auf, ist jedoch aufgrund des Fliessverhaltens nicht für senkrechte Applikation geeignet.

Das in *"*Automotive Circle International" Conference, 17/18 Oktober 2002, S. 33-42 (s.o.) vorgestellte Produkt dürfte aufgrund der recht hohen Viskosität von 500 Pa*s für senkrechte Applikation geeignet sein, weist jedoch eine dunkelgraue Farbe auf und ist daher für Anwendungen z.B. auf Glas nicht geeignet.

Es ist daher eine Aufgabe der vorliegenden Erfindung, einen Silan/Epoxid-Hybridklebstoff bereitzustellen, welcher sowohl eine hohe Lichtdurchlässigkeit gewährleistet als auch ein für senkrechte Applikation geeignetes Fliessverhalten bei ausreichender Shore A Härte und Zugfestigkeit aufweist.

Diese Aufgabe wird durch den erfindungsgemässen Hybridklebstoff gelöst.

Der erfindungsgemässe Hybridklebstoff weist ein Silanharz und ein Epoxidharz auf, und umfasst weiter
- mindestens ein nicht-aromatisches, tertiäres Di- oder Polyamin, insbesondere ausgewählt aus der Gruppe bestehend aus aliphatischen Aminen, cycloaliphatischen Aminen, Amido-Aminen, sowie Mischungen davon; und
- mindestens einen Silankatalysator, welcher keine Amin-Verbindung ist, insbesondere eine Organometall-Verbindung, vorzugsweise ausgewählt aus der Gruppe bestehend aus Organozinn-Verbindungen, eine Organozirkonat-Verbindungen, Organotitanat-Verbindungen, und Mischungen davon.

Unter einem Silanharz werden hierbei Polymere verstanden, deren Rückgrat aus einem Polymer, insbesondere einem Polyurethan, Silicon, Polyether, oder Polyolefin gebildet ist, welches mit Siloxangruppen modifiziert ist. Besonders bevorzugt sind aufgrund ihrer Reaktivität die Methoxysilane, welche unter Feuchtigkeitseinfluss vernetzen:

2 (CH₃O)ₘ(CH₃)ₙSi-R-Si(OCH₃)ₘ(CH₃)ₙ + H₂O → (CH₃O)ₘ(CH₃)ₙSi-R-Si (OCH₃)ₘ₋₁ (CH₃)ₙ-O-Si (OCH₃)ₘ₋₁(CH₃)ₙ-O-Si (OCH₃)ₘ(CH₃)ₙ + 2 CH₃OH

(mit m = 3, 2, 1; n = 0, 1, 2; m + n = 3)

Im Rahmen der vorliegenden Erfindung besonders bevorzugte Silanharze sind silanterminierte Polyurethane (z.B. Baycoll® XP 2458 auf Basis eines Polyetherpolyols) bzw. Reaktanten, die zur Bildung eines silanterminierten Polyurethans befähigt sind. Geeignete Reaktanten sind dem Fachmann bekannt (beispielsweise Isocyanat-terminierte Polyetherpolyole und Aminosilane wie z.B. Dynasylan® DAMO-T) .

Die Silanvernetzung wird in gängiger Praxis insbesondere durch Organometall-, vorzugsweise Zinnkatalysatoren oder durch Amine katalysiert, die sich hervorragend bewährt haben; prinzipiell geeignet sind jedoch alle Broenstedt/Lewis Säuren und Basen, die geeignet sind, den geschwindigkeitsbestimmenden Schritt, die Hydrolyse des Silanesters, zu katalysieren. Ein Aminkatalysator wäre in einem Silan/Epoxid-Hybridklebstoff besonders bevorzugt einzusetzen, da er auch die Epoxidvernetzung katalysiert:

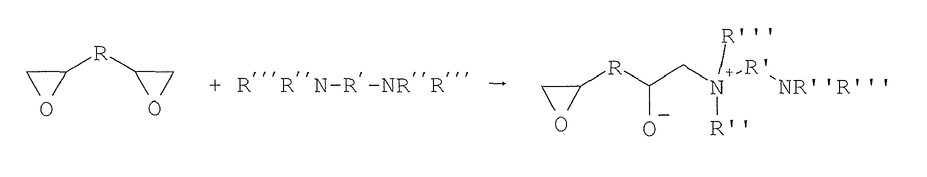

Die eigentlich aufgrund ihrer höheren Reaktivität bevorzugten aromatischen Amine weisen jedoch den vorliegend untolerablen Effekt auf, dass sie Verfärbungen erzeugen, die den optischen Eindruck stören. In der vorliegenden Erfindung kommen daher nicht-aromatische Amin-Katalysatoren zum Einsatz. Ein nichtaromatischer Aminkatalysator wurde jedoch als alleine nicht geeignet befunden, in einem verdickten Hybridklebstoff eine derart vollständige Vernetzung zu erzeugen, dass die gewünschte Shore A Härte von ≥ 60, vorzugsweise von ≥ 65, besonders bevorzugt von ≥ 70 im ausgehärteten Zustand resultiert. Es wurde gefunden, dass die nicht ausreichende Shore A Härte auf eine nicht vollständige Vernetzung des Siloxan-Anteils zurückzuführen ist. In der vorliegenden Erfindung kommt daher ein weiterer Silan-Katalysator zum Einsatz, welcher keine Amin-Verbindung ist. Besonders bevorzugt als Silan-Katalysator sind Organozinn-Verbindungen.

Ein weiterer Aspekt der vorliegenden Erfindung betrifft die Erzeugung einer derartigen Standfestigkeit, dass der Hybridklebstoff nach der Applikation in einer Auftragsdicke von ca. 1 mm, vorzugsweise von ca. 2 mm, besonders bevorzugt von ca. 3 mm an einer senkrechten Glasfläche aus Standardglas I der HVG-DGG (Hüttentechnische Vereinigung der deutschen Glasindustrie e.V., Deutsche Glastechnische Gesellschaft e.V.) nicht abläuft. Es könnten ohne weiteres eine Vielzahl von Füllstoffen beigegeben werden, wenn es lediglich darum ginge, eine derartige Standfestigkeit zu erzielen. Es musste jedoch ein Füllstoff gefunden werden, welcher die Transparenz bzw. Lichtdurchlässigkeit nicht signifikant behindert.

Als besonders vorteilhaft hat sich eine hydrophobe, insbesondere mit Hexamethyldisilazan modifizierte, pyrogene Kieselsäure, welche eine spezifische Oberfläche (BET) von ≥ 160 m²/g, vorzugsweise von ≥ 200 m²/g, besonders bevorzugt von ≥ 240 m²/g aufweist, herausgestellt. Derartige Produkte sind im Handel erhältlich, bspw. unter dem Handelsnamen Aerosil® R 812 (Degussa AG).

In besonders bevorzugten Ausführungsformen weist ein derartiger Hybridklebs-toff bei einer Lagerung während 24 Stunden unter Luftzutritt bei 70°C im wesentlichen keine Verfärbung und/oder Trübung des Klebstoffs auf.

Geeignete nicht-aromatische Polyamine sind dem Fachmann geläufig. Besonders bevorzugt ist als Bestandteil (a) ein nicht-aromatisches Polyamin eingesetzt, ausgewählt aus der Gruppe bestehend aus aus DABCO (1,4-diazabicyclo[2.2.2]octane), DBU (1,8-Diazabicyclo[5.4.0]undec-7-ene), DBN (1,5-Diazabicyclo[4.3.0]non-5-ene), 7-Methyl-1,5,7-triazabicyclo[4.4.0]dec-5-ene, 1,2,2,6,6-Pentamethylpiperidine, N,N-Diisopropyl-3-pentylamine, N-Ethyldiisopropylamine, 2-tert-Butyl-1,1,3,3-tetramethylguanidine, N,N'-Dimethylpiperazine, 1,8-Diazabicyclo-5,4,0-undecen-7, sowie Mischungen davon.

Besonders bevorzugt ist als Bestandteil (a) 1,8-Diazabicyclo-5,4,0-undecen-7, erhältlich unter dem Handelsnamen Lupragen N700 (BASF):

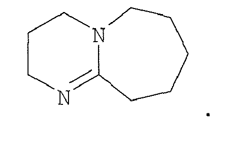

In besonders bevorzugten Ausführungsformen ist als Bestandteil (b) eine Organozinnverbindung eingesetzt, ausgewählt aus der Gruppe bestehend aus Dioctylzinndi(2-ethylhexanoat)Lösung, Dioctylzinndilaurat, Dioctylzinnoxid, Dibutylzinndilaurat, Dibutylzinndicarboxylat, Butylzinntris-(2-ethylhexanoat), Dibutylzinndineodecanoat, Laurylstannoxan, Dibutylzinndiketanoat, Dioctylzinnoxid, Dibutylzinndiacetat, Dibutylzinnmaleat, Dibutylzinndichlorid, Dibutylzinnsulfid, Dibutylzinnoxid, Butylzinndihydroxychlorid, Butylzinnoxid, Dibutylzinn(dioctylmaleinat), Tetrabutylzinn, Zinkricinoleat, Zinkoctoat, Zinkacetylacetonat, Zinkoxalat, sowie Mischungen davon.

Die alternativ oder ergänzend einsetzbaren Organozirkonat- oder Organotitanat-Verbindungen sind dem Fachmann geläufig, und beispielsweise von DuPont unter dem Markennamen Tyzor® erhältlich.

Besonders bevorzugt ist als Bestandteil (b) Laurylstannoxan, [(C₄H₉)₂Sn(OOCC₁₁H₂₃)]₂O, eingesetzt, welches im Handel erhältlich ist (Tegokat® 225, Goldschmidt TIB GmbH, Mannheim, Deutschland).

In besonders bevorzugten Ausführungsformen weist der erfindungsgemässe Hybridklebstoff im ausgehärteten Zustand eine Zugfestigkeit gemäss DIN 53455 (Aluminium) von ≥ 7 MPa, bevorzugt von ≥ 8 MPa, besonders bevorzugt von ≥ 9 MPa aufweist. Im Stand der Technik gelten silanterminierte Polyurethanharze und silanterminierte Polyether als äquivalent einsetzbar. Es wurde nun jedoch gefunden, dass silanterminierte Polyurethanharze, insbesondere auf Basis von Polyetherpolyolen, im Rahmen der vorliegenden Erfindung eine Zugfestigkeit gewährleisten können, welche derjenigen unter Einsatz von silanterminierten, reinen Polyethern überlegen ist.

Bei dem vorliegenden Hybridklebstoff handelt es sich vorzugsweise um einen 2-Komponenten Klebstoff, der bspw. in gängigen Doppelkartuschen oder geeigneten Schlauchbeuteln dargereicht werden kann. Hierbei wird das nicht-aromatische Polyamin und der Silankatalysator vorzugsweise in getrennten Komponenten vorliegen. Denkbar ist jedoch bei entsprechender Desaktivierung bzw. Verkapselung eines reaktiven Bestandteils, bspw. des Epoxids, auch eine 1K-Darreichung des erfindungsgemässen Hybridklebstoffs.

Wie vorstehend ausgeführt, soll die Transparenz des Klebstoffs möglichst wenig beeinträchtigt werden. Der erfindungsgemässe Hybridklebstoff weist daher besonders bevorzugt im ausgehärteten Zustand entlang einer Schichtdicke von 1 mm, hinterlegt mit einem BaSO₄ Hintergrund (Ulbricht'sche Kugel), eine Lichtdurchlässigkeit im sichtbaren Bereich von ≥ 30%, vorzugsweise von ≥ 40%, besonders bevorzugt von ≥ 50% auf.

Ein weiterer Aspekt der Erfindung betrifft also die Verwendung einer Katalysator-Kombination, umfassend
- mindestens ein nicht-aromatisches, tertiäres Di- oder Polyamin, insbesondere ausgewählt aus der Gruppe bestehend aus aliphatischen Aminen, cycloaliphatischen Aminen, Amido-Aminen, sowie Mischungen davon; und
- mindestens einen Silankatalysator, welcher keine Amin-Verbindung ist, insbesondere eine Organometall-Verbindung, vorzugsweise ausgewählt aus der Gruppe bestehend aus Organozinn-Verbindungen, Organozirkonat-Verbindungen, Organotitanat-Verbindungen, und Mischungen davon;
zur Vermeidung von Verfärbungen und/oder Trübungen in Klebstoffen, insbesondere den vorstehend beschriebenen Hybridklebstoffen.

Die Erfindung wird nachfolgend anhand eines konkreten Ausführungsbeispiels näher erläutert, ohne dass die Erfindung auf diese Ausführungsform zu beschränken ist. Ein exemplarischer 2K-Hybridklebstoff weist die folgende Zusammensetzung auf:

| **Bestandteil** | **Menge in g je kg Gesamt-Zusammensetzung** | **Anteil in %** |
|---|---|---|
| *in Komponente A:* | | |
| Baycoll XP 2458 *(¹)* | 838,490 | 83,860 |
| Kaneka SAT 10 *(²)* | 93, 140 | 9, 310 |
| Aerosil® R 812 *(³)* | 30,710 | 3,070 |
| Tinuvin 770 (*⁴*) | 2,230 | 0,223 |
| Irganox 1010 *(⁵)* | 2, 640 | 0, 264 |
| Dynasylan® VTMO (*⁶*) | 4,050 | 0,405 |
| Dynasylan® DAMO-T (*⁷*) | 20,470 | 2,050 |
| Lupragen N700 *(⁸)* | 7,670 | 0,770 |
| Baysilone Antifoam 100% *(⁹)* | 0,512 | 0,051 |
| **Total, Komp. A** | **999,912** | **100,003** |
| | | |
| *in Komponente B:* | | |
| Polypox E 411 *(¹⁰)* | 443,240 | 88, 650 |
| Aerosil@ R 812 *(³)* | 31,750 | 6,350 |
| Edenor C12 *(¹¹)* | 2,320 | 0,464 |
| Tegokat 225 *(¹²)* | 3, 400 | 0, 680 |
| Wasser, deion. | 4,640 | 0,928 |
| Baysilone Antifoam 100% (*⁹)* | 0,460 | 0,092 |
| Polypox R 20 *(¹³)* | 2,850 | 0,570 |
| 0.1% Sandoplast Blue 2B *(¹⁴)* in 100g Polypox E 411 | 11, 340 | 2,270 |
| **Total, Komp. B** | **500,003** | **100,040** |

| | | |
|---|---|---|
| Zu den verwendeten Bestandteilen: (¹): Silanterminiertes Polyurethan, Viskosität 35 Pa*s (Bayer MaterialScience); (²): kurzkettiger, Silyl-terminierter Polyether (Kaneka Corp.); (³): pyrogene Kieselsäure (Degussa AG); (⁴): UV-Stabilisator (Ciba Speciality Chemicals); (⁵): Antioxidationsmittel (Ciba Speciality Chemicals); (⁶): Vinyltrimethoxysilane (Degussa); (⁷): N-(2-Aminoethyl)-3-aminopropyltrimethoxysilane (Degussa); (⁸): 1,8-Diazabicyclo-5,4,0-undecen-7 (BASF) 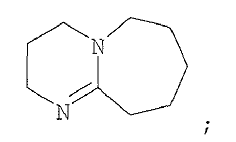 (⁹): Polyether-modifiziertes Methylpolysiloxan (Borchers GmbH); (¹⁰): niederviskoses, kristallisationsarmes Epoxidharz auf Basis von Bisphenol A (UPPC AG); (¹¹) : Laurinsäure (Cognis); (¹²) : Laurylstannoxan, [(C₄H₉) ₂Sn (OOCC₁₁H₂₃) ] ₂O (Goldschmidt TIB) ; (¹³): Epoxid-Verdünner (UPPC AG) 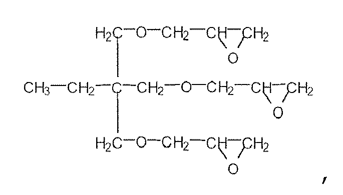 welcher (optional) zur Einstellung der Viskosität und Fliesseigengschaften genutzt werden kann; (¹⁴) : Anthrachinon-Farbstoff (Clariant). Dieser Farbstoff wurde in dem Ausführungsbeispiel beigefügt, um den Farbeindruck an die Tönung einer bestimmten Glasflanke anzupassen. Der Farbstoff kann zur Erzielung einer farblosen Transparenz des Klebstoffs ohne weiteres weggelassen werden. | | |

Insbesondere auch das Aerosil® wurde in vorstehendem Beispiel derart geeignet gewählt, dass die Anforderungen sowohl an die Lichtdurchlässigkeit als auch die Standfestigkeit erfüllt werden konnten: Während mit den Aerosilen R 202, R 972 und R 8200 keine befriedigenden Ergebnisse erzielt werden konnten, wurden die vorstehend genannten Zielvorgaben unter Verwendung von Aerosil R 812 erfüllt.

Die vorstehenden Komponenten A und B wurden im Verhältnis A/B von 2/1 zu einem erfindungsgemässen Hybridklebstoff gemischt und ausgehärtet (Mit fachüblichen Routinemassnahmen kann der Hybridklebstoff auch, falls gewünscht, auf ein beliebiges anderes Mischungsverhältnis bspw. im Bereich von 1:1 - 1:10 eingestellt werden). Auch nach 24 Stunden bei 70°C unter Luftzutritt wurde keinerlei Vergilbung oder Trübung des Klebstoffs beobachtet. Die Zusammensetzung weist eine derartige Standfestigkeit auf, dass sie nach der Applikation in einer Auftragsdicke von ca. 1 mm an einer senkrechten Glasfläche aus Standardglas I der HVG-DGG (Hüttentechnische Vereinigung der deutschen Glasindustrie e.V., Deutsche Glastechnische Gesellschaft e.V.) nicht abläuft. Die gewünschte Shore A Härte kann im Rahmen der Erfindung vom Fachmann leicht in Routineversuchen über die Auswahl und die Menge der Katalysatoren, insbesondere des nicht-aromatischen Di- oder Polyamins eingestellt werden.

## Patentansprüche

1. Hybridklebstoff, umfassend ein Silanharz und ein Epoxidharz, weiter enthaltend
(a) mindestens ein nicht-aromatisches, tertiäres Dioder Polyamin, insbesondere ausgewählt aus der Gruppe bestehend aus aliphatischen Aminen, cycloaliphatischen Aminen, Amido-Aminen, sowie Mischungen davon; und
(b) mindestens einen Silankatalysator, welcher keine Amin-Verbindung ist, insbesondere eine Organometall-Verbindung, vorzugsweise ausgewählt aus der Gruppe bestehend aus Organozinn-Verbindungen, Organozirkonat-Verbindungen, Organotitanat-Verbindungen, und Mischungen davon.

2. Hybridklebstoff gemäss Anspruch 1, weiter enthaltend eine hydrophobe, insbesondere mit Hexamethyldisilazan modifizierte, pyrogene Kieselsäure, welche eine spezifische Oberfläche von ≥ 160 m²/g, vorzugsweise von ≥ 200 m²/g, besonders bevorzugt von ≥ 240 m²/g aufweist.

3. Hybridklebstoff gemäss einem der Ansprüche 1 oder 2, **dadurch gekennzeichnet, dass** er derart standfest ist, dass er nach der Applikation in einer Auftragsdicke von ca. 1 mm, vorzugsweise von ca. 2 mm, besonders bevorzugt von ca. 3 mm an einer senkrechten Glasfläche aus Standardglas I der HVG-DGG (Hüttentechnische Vereinigung der deutschen Glasindustrie e.V., Deutsche Glastechnische Gesellschaft e.V.) nicht abläuft.

4. Hybridklebstoff gemäss einem der Ansprüche 1 bis 3, **dadurch gekennzeichnet, dass** bei einer Lagerung während 24 Stunden unter Luftzutritt bei 70°C im wesentlichen keine Verfärbung und/oder Trübung des Klebstoffs auftritt.

5. Hybridklebstoff gemäss einem der Ansprüche 1 bis 4, **dadurch gekennzeichnet, dass** er im ausgehärteten Zustand eine Shore A Härte von ≥ 60, vorzugsweise von ≥ 65, besonders bevorzugt von ≥ 70 aufweist.

6. Hybridklebstoff gemäss einem der Ansprüche 1 bis 5, **dadurch gekennzeichnet, dass** als Bestandteil (a) ein nicht-aromatisches Di- oder Polyamin eingesetzt ist, ausgewählt aus der Gruppe bestehend aus DABCO (1,4-diazabicyclo[2.2.2]octane), DBU (1,8-Diazabicyclo[5.4.0]undec-7-ene), DBN (1,5-Diazabicyclo[4.3.0]non-5-ene), 7-Methyl-1,5,7-triazabicyclo[4.4.0]dec-5-ene, 1,2,2,6,6-Pentamethylpiperidine, N,N-Diisopropyl-3-pentylamine, N-Ethyldiisopropylamine, 2-tert-Butyl-1,1,3,3-tetramethylguanidine, N,N'-Dimethylpiperazine, 1,8-Diazabicyclo-5,4,0-undecen-7, sowie Mischungen davon.

7. Hybridklebstoff gemäss Anspruch 6, **dadurch gekennzeichnet, dass** als Bestandteil (a) 1,8-Diazabicyclo-5,4,0-undecen-7, 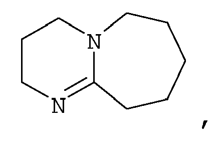 eingesetzt ist.

8. Hybridklebstoff gemäss einem der Ansprüche 1 bis 7, **dadurch gekennzeichnet, dass** als Bestandteil (b) eine Organozinnverbindung eingesetzt ist, ausgewählt aus der Gruppe bestehend aus Dioctylzinndi(2-ethylhexanoat)Lösung, Dioctylzinndilaurat, Dioctylzinnoxid, Dibutylzinndilaurat, Dibutylzinndicarboxylat, Butylzinntris-(2-ethylhexanoat), Dibutylzinndineodecanoat, Laurylstannoxan, Dibutylzinndiketanoat, Dioctylzinnoxid, Dibutylzinndiacetat, Dibutylzinnmaleat, Dibutylzinndichlorid, Dibutylzinnsulfid, Dibutylzinnoxid, Butylzinndihydroxychlorid, Butylzinnoxid, Dibutylzinn(dioctylmaleinat), Tetrabutylzinn, Zinkricinoleat, Zinkoctoat, Zinkacetylacetonat, Zinkoxalat, sowie Mischungen davon.

9. Hybridklebstoff gemäss Anspruch 8, **dadurch gekennzeichnet, dass** als Bestandteil (b) Laurylstannoxan, [(C₄H₉)₂Sn(OOCC₁₁H₂₃)]₂O, eingesetzt ist.

10. Hybridklebstoff gemäss einem der Ansprüche 1 bis 9, **dadurch gekennzeichnet, dass** die Zusammensetzung ein silanterminiertes Polyurethan oder Reaktanten, die zur Bildung eines silanterminierten Polyurethans befähigt sind, enthält.

11. Hybridklebstoff gemäss einem der Ansprüche 1 bis 10, **dadurch gekennzeichnet, dass** es sich um einen 1- oder 2-Komponenten Klebstoff handelt.

12. Hybridklebstoff gemäss Anspruch 11, **dadurch gekennzeichnet, dass** es sich um einen 2-Komponenten Klebstoff handelt, bei welchem das nicht-aromatische, tertiäre Polyamin und der Silankatalysator in getrennten Komponenten vorliegen.

13. Hybridklebstoff gemäss einem der Ansprüche 1 bis 12, **dadurch gekennzeichnet, dass** er im ausgehärteten Zustand eine Zugfestigkeit gemäss DIN 53455 (Aluminium) von ≥ 7 MPa, bevorzugt von ≥ 8 MPa, besonders bevorzugt von ≥ 9 MPa aufweist.

14. Hybridklebstoff gemäss einem der Ansprüche 1 bis 13, **dadurch gekennzeichnet, dass** er im ausgehärteten Zustand entlang einer Schichtdicke von 1 mm, hinterlegt mit einem BaSO₄ Hintergrund, eine Lichtdurchlässigkeit im sichtbaren Bereich von ≥ 30%, vorzugsweise von ≥ 40%, besonders bevorzugt von ≥ 50% aufweist.

15. Verwendung einer Katalysator-Kombination, umfassend
(a) mindestens ein nicht-aromatisches, tertiäres Dioder Polyamin, insbesondere ausgewählt aus der Gruppe bestehend aus aliphatischen Aminen, cycloaliphatischen Aminen, Amido-Aminen, sowie Mischungen davon; und
(b) mindestens einen Silankatalysator, welcher keine Amin-Verbindung ist, insbesondere eine Organometall-Verbindung, vorzugsweise ausgewählt aus der Gruppe bestehend aus Organozinn-Verbindungen, Organozirkonat-Verbindungen, Organotitanat-Verbindungen, und Mischungen davon,
zur Vermeidung von Verfärbungen und/oder Trübungen in Klebstoffen, insbesondere Hybridklebstoffen gemäss einem der Ansprüche 1 bis 14.

16. Verbund und/oder Abdichtung, hergestellt unter Verwendung eines Hybridklebstoffs gemäss einem der Ansprüche 1 bis 14.
